# FASCICULE DE BREVET EUROPEEN

(11) **EP 2 072 835 B1**
(45) Date de publication et mention de la délivrance du brevet: **26.09.2012**
(21) Numéro de dépôt: 08169120.6
(22) Date de dépôt: 14.11.2008
(51) Int. Cl.: F16B 5/02

(54) **Bague expansible pour la fixation d'un élément sur un autre élément, et procédé de fixation correspondant**
Dehnring für die Befestigung eines Elements auf einem anderen und entsprechendes Befestigungsverfahren
Expansion ring for attaching one element to another element, and corresponding attachment method

(30) Priorité: 21.12.2007 FR 0760281
(43) Date de publication de la demande: 24.06.2009
(73) Titulaire: PEUGEOT CITROËN AUTOMOBILES S.A., 78140 Vélizy Villacoublay (FR)
(72) Inventeur: Sagorin, Fabrice, 91170 Viry Chatillon (FR)
(74) Mandataire: Vigand, Régis Louis Michel

(56) Documents cités:
- EP-A- 1 216 881
- DE-U1- 8 625 410
- FR-A- 2 800 810

## Description

L'invention concerne le domaine de la fixation, par vissage, d'un premier élément sur un second élément, faisant par exemple partie d'un véhicule automobile (DE 86 254 10 U1).

Comme le sait l'homme de l'art, en raison de la matière qui les constitue, certains éléments peuvent faire rapidement l'objet d'un phénomène de fluage au niveau d'une partie qui est soumise à un couple de serrage par un élément de vissage. On entend ici par « fluage » une déformation plastique lente. C'est par exemple le cas des parties de fixation de certains blocs optiques de véhicule automobile.

Ce fluage induit une perte du couple de serrage de l'élément fixé qui peut le faire vibrer. Ces vibrations peuvent nuire au bon fonctionnement de l'élément fixé, voire même entraîner sa dégradation. Par exemple, dans le cas d'un bloc optique les vibrations peuvent induire un effet de scintillement qui peut fatiguer les passagers. En outre, ces vibrations peuvent se propager via un autre élément (par exemple la structure du véhicule) et induire des bruits gênants (par exemple à l'intérieur de l'habitacle du véhicule).

Afin de pallier ce phénomène de fluage plusieurs solutions ont été proposées.

Une première solution consiste à utiliser des éléments de vissage comprenant un filetage muni d'un « frein filet ». Une telle solution est onéreuse et ses résultats ne sont pas garantis.

Une deuxième solution consiste à utiliser une nouvelle matière moins sujette au fluage pour constituer les éléments à fixer. Une telle solution est également onéreuse.

Une troisième solution consiste à diminuer le couple de serrage. Une telle solution induit rapidement des vibrations qui sont du même type que celles induites par le fluage.

Une quatrième solution consiste à loger une bague anti-fluage à l'intérieur de l'orifice qui, au sein de l'élément à fixer, permet le passage de l'élément de vissage. Une telle solution est notamment décrite dans le document brevet EP 1216881. Elle assure de bons résultats, mais elle s'avère onéreuse en raison de la difficulté que l'on a, d'une part, à solidariser la bague à l'élément à fixer avant de procéder à la fixation de ce dernier (par exemple sur une chaîne de montage), et d'autre part, à serrer la bague sur l'élément pendant la fixation de ce dernier.

L'invention a pour but de proposer une bague d'un nouveau type, destinée à être logée à l'intérieur d'un premier orifice d'un premier élément, lui même destiné à être fixé sur un second élément au moyen d'un élément de vissage, qui ne présente pas les inconvénients précités des bagues anti-fluage connues et qui permet de mettre en oeuvre un nouveau procédé de fixation d'élément.

Cette bague se caractérise par le fait qu'elle est expansible et qu'elle comprend une paroi interrompue par une fente qui présente une inclinaison choisie par rapport à une direction axiale et deux bords décalés axialement et l'un au moins destiné à saillir partiellement hors d'un premier orifice, de sorte qu'en cas de compression axiale par une tête d'un élément de vissage les bords soient contraints à s'appuyer l'un sur l'autre en provoquant une expansion de la bague dans une direction transversale et ainsi son serrage à l'intérieur du premier orifice.

C'est simplement l'appui des bords de fente l'un sur l'autre qui provoque l'expansion transversale de la bague.

De préférence, un des bords de fente est saillant par rapport à l'autre pour venir facilement appuyer sur lui lors de l'expansion transversale de la bague.

La bague selon l'invention peut comporter d'autres caractéristiques qui peuvent être prises séparément ou en combinaison, et notamment :
- sa paroi peut comprendre au moins un élément de maintien propre à la solidariser au premier élément dans une position dans laquelle l'un au moins des bords de sa fente présente une partie qui saille hors du premier orifice ; ➢ chaque élément de maintien peut par exemple être placé à une extrémité de la paroi qui contient au moins une partie de bord qui est destinée à saillir hors du premier orifice ; ➢ chaque élément de maintien peut par exemple être agencé sous la forme d'une patte flexible propre à s'appuyer sur une partie inclinée située à la périphérie du premier orifice ;
- sa paroi peut comprendre une extrémité munie d'au moins une patte d'appui destinée à s'appuyer sur le second élément et à participer avec chaque élément de maintien à la solidarisation de la bague au premier élément ;
- elle peut être réalisée dans un matériau métallique.

L'invention propose également un premier élément, destiné à être fixé sur un second élément au moyen d'un élément de vissage, et comprenant un premier orifice logeant partiellement une bague expansible du type de celle présentée ci-avant. Un tel premier élément peut par exemple constituer un bloc optique d'un véhicule automobile.

L'invention propose également un procédé, dédié à la fixation d'un premier élément sur un second élément, ces premier et second éléments comprenant respectivement des premier et second orifices propres à être traversés par un axe fileté d'un élément de vissage.

Ce procédé de fixation se caractérise par le fait qu'il consiste :
- à loger à l'intérieur du premier orifice une partie d'une bague expansible munie d'une paroi interrompue par une fente qui présente une inclinaison choisie par rapport à une direction axiale et deux bords décalés axialement et l'un au moins saillant partiellement hors du premier orifice,
- à placer le premier élément contre le second élément, de sorte que leurs premier et second orifices soient en regard l'un de l'autre, et
- à introduire l'axe fileté dans les premier et second orifices via la bague, puis à visser l'axe fileté dans le second orifice jusqu'à ce que la tête de l'élément de vissage comprime axialement la partie saillante des bords contraignant ces derniers à s'appuyer l'un sur l'autre en provoquant une expansion de la bague dans une direction transversale et ainsi son serrage à l'intérieur du premier orifice.
- De préférence, les bords de la fente sont sensiblement parallèles entre eux.

D'autres caractéristiques et avantages de l'invention apparaîtront à l'examen de la description détaillée ci-après, et des dessins annexés, sur lesquels :
- la figure 1 illustre schématiquement, dans une vue en perspective, un exemple de réalisation d'une bague expansible selon l'invention,
- la figure 2 illustre schématiquement, dans une vue de face du côté de la fente inclinée, la bague expansible de la figure 1,
- la figure 3 illustre schématiquement, dans une vue en perspective, la bague expansible des figures 1 et 2 une fois solidarisée à un premier élément de type bloc optique,
- la figure 4 est une vue en coupe transversale de l'ensemble constitué du premier élément et de la bague expansible, selon l'axe IV-IV de la figure 3, et
- la figure 5 est une vue en coupe transversale de l'ensemble constitué du premier élément et de la bague expansible, selon l'axe IV-IV de la figure 3, pendant sa fixation à un second élément d'un véhicule automobile.

Les dessins annexés pourront non seulement servir à compléter l'invention, mais aussi contribuer à sa définition, le cas échéant.

L'invention est destinée à permettre une fixation de qualité, sans fluage, d'un premier élément sur un second élément.

Dans ce qui suit on considère que le premier élément (E1) est un bloc optique d'un véhicule automobile et que le second élément (E2) est une partie de la structure dudit véhicule automobile. Mais, l'invention n'est pas limitée à ces types d'éléments. Elle concerne en effet tout premier élément susceptible de faire l'objet d'un fluage local lorsqu'il est fixé à un second élément au moyen d'un élément de vissage.

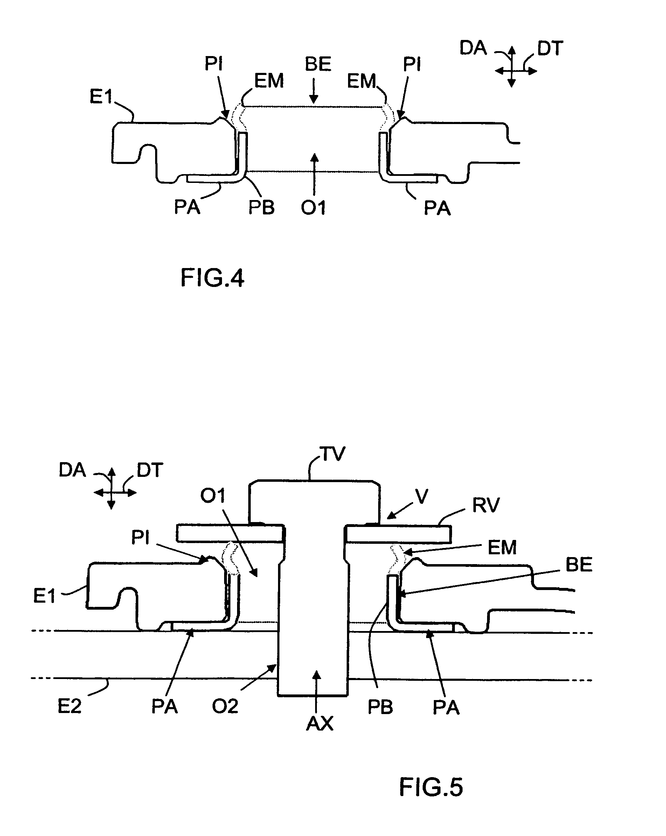

Afin de permettre la fixation de qualité précitée, l'invention propose de solidariser une bague expansible BE à l'intérieur d'un premier orifice 01 d'un premier élément E1 qui est destiné à être fixé à un second élément E2, au niveau d'un second orifice 02 que comprend ce dernier E2 et au moyen d'un élément de vissage V (voir figure 5), comme par exemple une vis ou un boulon éventuellement couplé(e) à une rondelle RV.

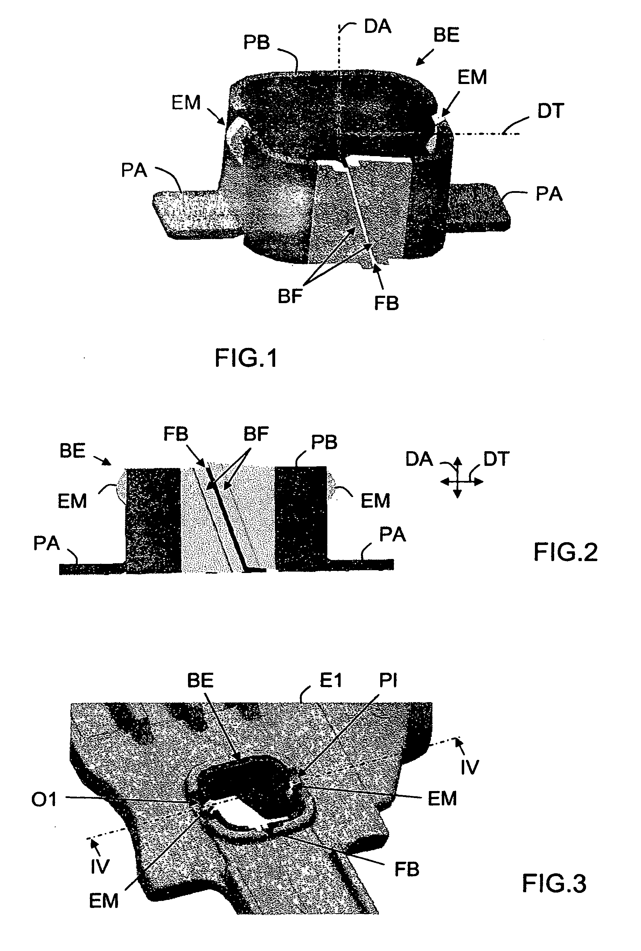

Un exemple de réalisation, non limitatif, d'une bague expansible BE selon l'invention est schématiquement représenté sur les figures 1 et 2.

Une telle bague (expansible) BE comprend essentiellement une paroi PB qui est par exemple réalisée dans un matériau métallique. Cette paroi PB est conformée de manière à présenter sensiblement la forme de la première ouverture 01 dans laquelle elle est destinée à être partiellement logée étroitement.

Par ailleurs, selon l'invention la paroi PB est interrompue par une fente FB sur l'un de ses côtés (ou en un endroit choisi si elle est de forme sensiblement cylindrique circulaire). On entend ici par « interrompue » le fait de présenter initialement (c'est-à-dire avant fixation) deux bords d'extrémité BF, sensiblement parallèles et distants l'un de l'autre de manière à définir une fente FB ouverte.

Comme illustré sur la figure 2, cette fente FB présente une inclinaison choisie par rapport à une direction axiale DA et les deux bords d'extrémité BF (inclinés) qui la délimitent sur ses grands côtés sont décalés axialement (c'est-à-dire suivant la direction axiale DA). La direction axiale DA est ici la direction par rapport à laquelle est définie la hauteur de la paroi PB, mais également la direction de l'axe fileté AX de l'élément de vissage V qui est destiné à fixer par vissage le premier élément E1 sur le second élément E2.

L'inclinaison est par exemple comprise entre environ 5° et environ 40°. Par exemple, elle est choisie sensiblement égale à 25°. L'inclinaison peut aussi être comprise entre 0° et 5°, mais l'expansion de la bague obtenue est nettement plus faible, elle peut toutefois suffire dans certains cas.

Le décalage axial d'un bord d'extrémité BF par rapport à l'autre peut par exemple être obtenu par pliage.

Comme illustré sur les figures 1 à 3, on notera que les deux bords d'extrémité BF peuvent être éventuellement repliés vers l'extérieur de la bague BE, suivant une direction sensiblement radiale. Cela permet en effet d'augmenter leur surface d'appui.

La bague BE est introduite, par exemple manuellement (ou au moyen d'un outil), à l'intérieur du premier orifice 01 d'un premier élément E1, comme illustré sur les figures 3 et 4. Pour ce faire, on rapproche ses deux bords d'extrémité BF de manière à réduire légèrement ses dimensions, puis on l'introduit dans le premier orifice 01, par exemple par une face arrière du premier élément E1. Une fois la bague BE positionnée, on libère ses deux bords d'extrémité BF afin que sa paroi PB soit au contact de la paroi du premier élément E1 qui délimite le premier orifice 01.

Afin d'éviter que la bague BE sorte du premier orifice 01, par exemple pendant une opération de transport ou de stockage temporaire, et afin qu'elle demeure dans sa position finale de manière à remplir sa fonction d'anti-fluage lors de la fixation du premier élément E1 sur le second élément E2, il est avantageux qu'elle soit solidarisée au premier élément E1. Pour ce faire, sa paroi PB peut comprendre, comme illustré sur les figures 1 à 5, au moins un élément de maintien EM destiné à la solidariser au premier élément E1 dans une position finale dans laquelle une partie terminale de l'un au moins de ses deux bords d'extrémité BF saille hors du premier orifice 01.

Comme illustré, on peut par exemple prévoir deux éléments de maintien EM, placés sensiblement l'un en face de l'autre (c'est-à-dire de façon diamétralement opposée).

Par exemple, et comme illustré sur les figures 1 à 5, chaque élément de maintien EM peut être formé au niveau d'une première extrémité libre de la paroi PB qui contient chaque partie terminale de bord d'extrémité BF qui est destinée à saillir hors du premier orifice 01. Mais cela n'est pas obligatoire. On pourrait en effet définir au moins un élément de maintien EM dans une zone intermédiaire de la paroi PB, par exemple sous la forme d'un bossage saillant vers l'extérieur et destiné à être logé dans un creux de forme homologue défini dans la paroi délimitant le premier orifice 01.

Dans l'exemple non limitatif illustré, les deux éléments de maintien EM sont agencés sous la forme d'une patte (ou ailette) flexible qui est destinée à s'appuyer sur une partie inclinée PI correspondante qui est située à la périphérie du premier orifice 01. Comme illustré, chaque partie inclinée PI peut par exemple être définie dans une encoche de la paroi qui délimite le premier orifice 01. Par ailleurs, chaque patte flexible EM peut par exemple être réalisée par découpe (ou usinage) puis pliage de la paroi PB.

Lors de l'introduction de la bague BE dans le premier orifice 01, les pattes flexibles EM sont repoussées vers l'intérieur de la bague BE et donc écartées de leur position de repos. Et, lorsque la première extrémité libre de la paroi PB parvient au niveau des encoches où sont formées les parties inclinées PI, les pattes flexibles EM sont libérées de leur contrainte et viennent s'appuyer sur les parties inclinées PI, comme illustré sur la figure 4.

Afin de renforcer encore la solidarisation de la bague BE à son premier élément E1, la paroi PB de la bague BE peut, comme illustré sur les figures, comprendre une seconde extrémité, opposée à la première (comportant les pattes flexibles EM), et munie d'au moins une patte d'appui PA orientée vers l'extérieur suivant une direction sensiblement radiale (ou transversale DT). Une fois la bague BE positionnée dans sa position finale par rapport au premier élément E1, ses déplacements axiaux (suivant DA) sont bloqués par le fait que ses pattes flexibles EM et ses pattes d'appui PA sont bloquées axialement par les deux faces « supérieure » et « inférieure » de la paroi du premier élément E1. En d'autres termes, chaque patte d'appui PA participe avec chaque élément de maintien EM à la solidarisation de la bague BE au premier élément E1.

En outre, chaque patte d'appui PA peut s'appuyer sur le second élément E2, contribuant ainsi à empêcher le fluage du premier élément E1 au niveau de son premier orifice 01, comme illustré sur la figure 5.

Une fois qu'une bague BE a été solidarisée à un premier élément E1, ils constituent un ensemble qui est prêt à être fixé à un second élément E2. On comprendra qu'un tel ensemble peut être soit stocké avant d'être ultérieurement fixé à un second élément E2, soit constitué dans le but d'être « immédiatement » fixé à un second élément E2. La réalisation de cet ensemble constitue une première phase d'un procédé de fixation selon l'invention dont la phase suivante se déroule comme indiqué ci-après, éventuellement après une interruption due à un stockage.

On place le premier élément E1 (équipé de sa bague BE) contre le second élément E2 de sorte que leurs premier 01 et second 02 orifices soient en regard l'un de l'autre. Puis, on introduit l'axe fileté AF d'un élément de vissage V dans les premier 01 et second 02 orifices via la bague BE, jusqu'à ce que son filetage parvienne au niveau du filetage correspondant qui est défini dans la paroi délimitant le second orifice 02. Ensuite, on visse l'axe fileté AF dans le second orifice 02 jusqu'à ce que la tête TV de l'élément de vissage V comprime axialement (suivant DA) la partie terminale du bord d'extrémité BF de la bague BE, qui saille hors du premier orifice 01.

On notera que l'élément de vissage V peut éventuellement comprendre une rondelle RV traversée par son axe filetée AX et au contact de sa tête TV, comme illustré sur la figure 5. Dans ce cas, la tête TV comprime axialement la bague BE par l'intermédiaire de la rondelle RV.

Cette compression axiale contraint les deux bords d'extrémité BF à s'appuyer l'un sur l'autre. Le déplacement axial des deux bords d'extrémité BF étant alors bloqué, la compression axiale issue du vissage est transformée en une contrainte sensiblement suivant la direction transversale DT qui provoque une expansion de la bague BE dans cette direction transversale DT et ainsi son serrage à l'intérieur du premier orifice 01. On comprendra qu'une fois la paroi PB de la bague BE serrée contre la paroi du premier élément E1, au niveau de son premier orifice 01, elle empêche le fluage dudit premier élément E1, permettant ainsi de parfaitement l'immobiliser par rapport au second élément E2, de façon durable.

L'invention offre un certain nombre d'avantages, parmi lesquels :
- une solidarisation de la bague BE au premier élément E1 très rapide et pouvant être effectuée facilement manuellement sans outillage spécifique,
- l'absence de risque de dégradation lors de l'insertion de la bague BE dans le premier orifice 01, puisque la bague BE est simplement introduite par déplacement axial, puis bloquée axialement lorsqu'elle comprend des éléments de maintien EM et d'éventuelles pattes d'appui PA,
- un serrage de la bague dans un premier orifice 01 qui est transparent pour un opérateur, puisqu'il découle automatiquement de la fixation du premier élément E1 sur le second élément E2 au moyen de l'élément de vissage V,
- l'absence d'outil de monte spécifique et donc l'évitement de manipulations à risque,
- l'évitement d'une pollution du premier élément E1 (par exemple un bloc optique) du fait de l'absence d'outil de serrage spécifique pouvant utiliser de la graisse.

L'invention ne se limite pas aux modes de réalisation de bague expansible, d'ensemble constitué d'un premier élément équipé d'une bague expansible, et de procédé de fixation décrits ci-avant, seulement à titre d'exemple, mais elle englobe toutes les variantes que pourra envisager l'homme de l'art dans le cadre des revendications ci-après.

## Revendications

1. Procédé de fixation d'un premier élément (E1) sur un second élément (E2), lesdits premier (E1) et second (E2) éléments comprenant respectivement des premier (O1) et second (02) orifices propres à être traversés par un axe fileté (AX) d'un élément de vissage (V), **caractérisé en ce qu'**il consiste i) à loger à l'intérieur dudit premier orifice (O1) une partie d'une bague expansible (BE) munie d'une paroi (PB) interrompue par une fente (FB) présentant une inclinaison choisie par rapport à une direction axiale et deux bords (BF) décalés axialement et l'un au moins saillant partiellement hors dudit premier orifice (O1), ii) à placer ledit premier élément (E1) contre ledit second élément (E2), de sorte que leurs premier (O1 et second (02) orifices soient en regard l'un de l'autre, et iii) à introduire ledit axe fileté (AX) dans lesdits premier (O1) et second (02) orifices via ladite bague (BE), puis à visser ledit axe fileté (AX) dans ledit second orifice (02) jusqu'à ce que la tête (TV) de l'élément de vissage (V) comprime axialement ladite partie saillante des bords (BF) contraignant ces derniers à s'appuyer l'un sur l'autre en provoquant une expansion de la bague (BE) dans une direction transversale et ainsi son serrage à l'intérieur dudit premier orifice (O1), et **en ce que** les bords (BF) de la fente (FB) sont sensiblement parallèles entre eux.

2. Bague (BE), propre à être logée à l'intérieur d'un premier orifice (O1) d'un premier élément (E1) destiné à être fixé sur un second élément (E2) au moyen d'un élément de vissage (V), **caractérisée en ce qu'**elle est expansible et comprend une paroi (PB) interrompue par une fente (FB) présentant une inclinaison choisie par rapport à une direction axiale et deux bords (BF) décalés axialement et l'un au moins destiné à saillir partiellement hors d'un premier orifice (O1) de sorte qu'en cas de compression axiale par une tête (TV) d'un élément de vissage (V) lesdits bords (BF) soient contraints à s'appuyer l'un sur l'autre en provoquant une expansion de la bague (BE) dans une direction transversale et ainsi son serrage à l'intérieur dudit premier orifice (O1), et **en ce que en ce que** les bords (BF) de la fente (FB) sont sensiblement parallèles entre eux.

3. Bague selon la revendication 2, **caractérisée en ce que** ladite paroi (PB) comprend au moins un élément de maintien (EM) propre à la solidariser audit premier élément (E1) dans une position dans laquelle l'un au moins desdits bords (BF) présente une partie saillant hors dudit premier orifice (O1).

4. Bague selon la revendication 3, **caractérisée en ce que** chaque élément de maintien (EM) est placé à une extrémité de ladite paroi (PB) contenant ladite partie de bord destinée à saillir hors dudit premier orifice (O1).

5. Bague selon l'une des revendications 3 et 4, **caractérisée en ce que** chaque élément de maintien (EM) est agencé sous la forme d'une patte flexible propre à s'appuyer sur une partie inclinée (PI) située à la périphérie dudit premier orifice (O1).

6. Bague selon l'une des revendications 2 à 5, **caractérisée en ce que** ladite paroi (PB) comprend une extrémité munie d'au moins une patte d'appui (PA) destinée à s'appuyer sur ledit second élément (E2) et à participer avec chaque élément de maintien (EM) à la solidarisation de ladite bague (BE) audit premier élément (E1).

7. Bague selon l'une des revendications 2 à 6, **caractérisée en ce qu'**elle est réalisée dans un matériau métallique.

8. Premier élément (E1), destiné à être fixé sur un second élément (E2) au moyen d'un élément de vissage (V), **caractérisé en ce qu'**il comprend un premier orifice (O1) logeant partiellement une bague expansible (BE) selon l'une des revendications 2 à 7.

9. Premier élément selon la revendication 8, **caractérisé en ce qu'**il constitue un bloc optique d'un véhicule automobile.

## Claims

1. A method for attaching a first element (E1) onto a second element (E2), said first (E1) and second (E2) elements respectively comprising first (O1) and second (02) orifices capable of being crossed by a threaded axis (AX) of a screwing element (V), **characterised in that** it consists i) of accommodating inside said first orifice (O1) a portion of an expansible ring (BE) provided with a wall (PB) interrupted by a slot (FB) having a tilt selected with respect to an axial direction and two axially offset edges (BF) and at least one partly protruding out of said first orifice (O1), ii) of placing said first element (E1) against said second element (E2), so that their first (O1) and second (02) orifices are facing each other, and iii) of introducing said threaded axis (AX) into said first (O1) and second (02) orifices via said ring (BE), and of then screwing said threaded axis (AX) into said second orifice (02) until the head (TV) of the screwing element (V) axially compresses said portion protruding from the edges (BF) forcing the latter to bear upon each other, while causing expansion of the ring (BE) in a transverse direction and thus its tightening inside said first orifice (O1), and **in that** the edges (BF) of the slot (FB) are substantially parallel to each other.

2. A ring (BE), capable of being accommodated inside a first orifice (O1) of a first element (E1) intended to be attached on a second element (E2) by means of a screwing element (V), **characterised in that** it is expansible and comprises a wall (PB) interrupted by a slot (FB) having a selected tilt relatively to the axial direction and two axially offset edges (BF), and at least one intended to protrude out of a first orifice (O1) so that, in the case of axial compression by a head (TV) of a screwing element (V), said edges (BF) are forced to bear upon each other, while causing expansion of the ring (BE) in a transverse direction and thus its tightening inside said first orifice (O1), and **in that** the edges (BF) of the slot (FB) are substantially parallel to each other

3. The ring according to claim 2, **characterised in that** said wall (PB) comprises at least one holding element (EM) capable of securing it to said first element (E1) in a position in which at least one of said edges (BF) has a portion protruding out of said first orifice (O1).

4. The ring according to claim 3, **characterised in that** each holding element (EM) is placed at one end of said wall (PB) containing said edge portion intended to protrude out of said first orifice (O1).

5. The ring according to one of claims 3 and 4, **characterised in that** each holding element (EM) is laid out as a flexible tab capable of bearing upon a tilted portion (P1) located at the periphery of said first orifice (O1).

6. The ring according to one of claims 2 to 5, **characterised in that** said wall (PB) comprises an end provided with at least one supporting tab (PA) intended to bear upon said second element (E2) and to participate with each holding element (EM) in securing said ring (BE) to said first element (E1).

7. The ring according to one of claims 2 to 6, **characterised in that** it is made in a metal material.

8. A first element (E1), intended to be attached onto a second element (E2) by means of a screwing element (V), **characterised in that** it comprises a first orifice (O1) partly accommodating an expansible ring (BE) according to one of claims 2 to 7.

9. The first element according to claim 8, **characterised in that** it forms an optical block of a motor vehicle.

## Patentansprüche

1. Verfahren zum Befestigen eines ersten Elements (E1) auf einem zweiten Element (E2), wobei das besagte erste (E1 ) und zweite (E2) Element jeweils erste (O1) und zweite (02) Öffnungen umfassen, die geeignet sind, von einer Gewindeachse (AX) eines Schraubelements (V) durchquert zu werden, **dadurch gekennzeichnet, dass** es darin besteht i), im Inneren der besagten ersten Öffnung (O1) einen Teil eines Spreizringes (BE) einzusetzen, der mit einer Wand (PB) versehen ist, die durch einen Spalt (FB) unterbrochen wird, der eine Neigung aufweist, die in Bezug auf eine axiale Richtung und zwei axial versetzte Ränder (BF) ausgewählt wird, von denen einer zumindest teilweise aus der besagten ersten Öffnung (O1) übersteht ii), das besagte erste Element (E1) gegen das besagte zweite Element (E2) zu platzieren, sodass ihre ersten (O1) und zweiten (02) Öffnungen einander gegenüber liegen, und iii) die besagte Gewindeachse (AX) durch den besagten Ring (BE) in die erste (O1) und zweite (02) Öffnung einzuführen, und die besagte Gewindeachse (AX) dann in der zweiten Öffnung (02) zu verschrauben, bis der Kopf (TV) des Schraubelements (V) den besagten überstehenden Teil der Ränder (BF) axial zusammendrückt, wodurch letztere dazu gezwungen werden, sich aneinander zu drücken, und dadurch eine Spreizung des Ringes (BE) in eine transversale Richtung hervorzurufen, und somit seine Einspannung im Inneren der besagten Öffnung (O1), und dadurch, dass die Ränder (BF) des Spaltes (FB) in etwa parallel zueinander liegen.

2. Ring (BE), der geeignet ist, ins Innere einer ersten Öffnung (O1) eines ersten Elements (E1) eingesetzt zu werden, das dazu bestimmt ist, anhand eines Schraubelements (V) auf einem zweiten Element (E2) befestigt zu werden, **dadurch gekennzeichnet, dass** er spreizbar ist, und eine Wand (PB) umfasst, die durch einen Spalt (FB) unterbrochen wird, der eine Neigung aufweist, die in Bezug auf eine axiale Richtung und zwei axial versetzte Ränder (BF) ausgewählt wird, von denen einer zumindest teilweise aus der besagten ersten Öffnung (O1) übersteht, sodass die besagten Ränder (BF) im Falle einer axialen Komprimierung eines Schraubelements (V) durch einen Kopf (TV) dazu gezwungen sind, sich aneinander zu drücken, und dadurch eine Spreizung des Ringes (BE) in eine transversale Richtung hervorzurufen, und somit die Einspannung im Inneren der besagten Öffnung (O1), und dadurch, dass die Ränder (BF) des Spaltes (FB) in etwa parallel zueinander liegen.

3. Ring nach Anspruch 2, **dadurch gekennzeichnet, dass** die besagte Wand (PB) zumindest ein Halteelement (EM) umfasst, das geeignet ist, sich in einer Position fest mit dem besagten ersten Element (E1) zu verbinden, in der zumindest einer der besagten Ränder (BF) einen Abschnitt aufweist, der aus der besagten ersten Öffnung (O1) übersteht.

4. Ring nach Anspruch 3, **dadurch gekennzeichnet, dass** jedes Halteelement (EM) an einem Ende der besagten Wand (PB) umfassend den besagten Randabschnitt angeordnet ist, der dazu bestimmt ist, aus der besagten ersten Öffnung (O1) überzustehen

5. Ring nach einem der Ansprüche 3 und 4, **dadurch gekennzeichnet, dass** jedes Halteelement (EM) in Form einer flexiblen Lasche angeordnet ist, die geeignet ist, sich an einem schrägen Abschnitt (P1) anzulegen, der sich an der Peripherie der besagten ersten Öffnung (O1) befindet.

6. Ring nach einem der Ansprüche 2 bis 5, **dadurch gekennzeichnet, dass** die besagte Wand (PB) ein Ende umfasst, das mit zumindest einer Auflagelasche (PA) ausgestattet ist, die dazu bestimmt ist, sich an dem besagten zweiten Element (E2) anzulegen, und mit jedem Halteelement (EM) zur festen Verbindung des besagten Ringes (BE) auf dem besagten ersten Element (E1) beizutragen.

7. Ring nach einem der Ansprüche 2 bis 6, **dadurch gekennzeichnet, dass** er aus einem metallischen Werkstoff gefertigt ist.

8. Erstes Element (E1), das dazu bestimmt ist, mit einem Schraubelement (V) auf einem zweiten Element (E2) befestigt zu werden, **dadurch gekennzeichnet, dass** es eine erste Öffnung (O1) umfasst, in der ein Spreizring (BE) nach einem der Ansprüche 2 bis 7 zum Teil aufgenommen wird.

9. Erstes Element nach Anspruch 8, **dadurch gekennzeichnet, dass** es einen Optikblock eines Kraftfahrzeuges bildet.
